# EUROPÄISCHE PATENTSCHRIFT

(11) **EP 2 494 242 B1**
(45) Veröffentlichungstag und Bekanntmachung des Hinweises auf die Patenterteilung: **24.07.2013**
(21) Anmeldenummer: 10750057.1
(22) Anmeldetag: 26.08.2010
(51) Int. Cl.: F16K 31/40

(54) **MAGNETVENTIL**
SOLENOID VALVE
ELECTROVANNE

(30) Priorität: 26.10.2009 DE 102009051573; 26.10.2009 DE 102009051574; 26.10.2009 DE 102009051572
(43) Veröffentlichungstag der Anmeldung: 05.09.2012
(73) Patentinhaber: Hydac Fluidtechnik GmbH, 66280 Sulzbach/Saar (DE)
(72) Erfinder: HELL, Franz-Rudolf, 66822 Lebach (DE)
(74) Vertreter: Bartels, Martin Erich Arthur
(86) Internationale Anmeldenummer: PCT/EP2010/005238
(87) Internationale Veröffentlichungsnummer: WO 2011/050877

(56) Entgegenhaltungen:
- US-A- 4 592 533
- US-A- 5 271 599
- US-B1- 6 502 393

## Beschreibung

Die Erfindung betrifft ein Magnetventil für die Ansteuerung eines Fluids, mit einem ersten Gehäuseteil mit einer Axialführung für einen Magnetanker, der unter der Wirkung einer, das erste Gehäuseteil nach außen hin zumindest teilweise umgebenden Magnetspule in der Axialführung verschiebbar ist, mit einem Energiespeicher, und mit einem ein Ventilschließglied beaufschlagenden Betätigungsteil, wobei das Ventilschließglied ein Rückschlagventil für eine Ansteuerung einer Bypassbohrung in dem Ventilschließglied aufweist, dessen ein Rückschlagventil-Schließglied aufnehmendes und dieses bewegbar haltendes Gehäuse einstückig mit dem Ventilschließglied gebildet ist und dass das Gehäuse aufgrund einer Gestaltänderung nach Einsetzen des Rückschlagventil-Schließgliedes dieses in seiner jeweiligen Funktionsstellung hält, wobei das Gehäuse des Rückschlagventils nach Einsetzen des Rückschlagventil-Schließgliedes durch einen Umformvorgang in seiner Gestalt derart verändert ist, dass das Rückschlagventil-Schließglied vor einem Ventilsitz des Rückschlagventils bewegbar gesichert ist. Ferner betrifft die Erfindung ein Verfahren zur Herstellung eines dahingehenden Magnetventils.

Die Gebrauchsmusterschrift DE-U-85 22 724 beschreibt ein Magnetventil, mit einem ersten zylindrischen, aus einem ferromagnetischen Material gebildeten Gehäuseteil und einem zweiten hülsenförmigen, gleichfalls aus einem ferromagnetischen Material bestehenden Gehäuseteil zur Aufnahme eines Magnetankers, der einen Ventilsitzkörper des Ventils ansteuert. Der Ventilsitzkörper weist hierfür mehrere Druckmittelanschlüsse auf, die in der Grundstellung des Magnetventils durch einen an dem Magnetanker angebrachten Stößel hydraulisch voneinander getrennt sind. Die beiden Gehäuseteile selbst sind durch ein ringförmiges weiteres Gehäuseteil aus einem nicht-magnetischen Werkstoff magnetisch insoweit voneinander getrennt; jedoch körperlich miteinander verbunden. Die genannte magnetische Trennung über das weitere Gehäuseteil dient unter anderem dazu, auf jeden Fall einem sogenannten magnetischen Kurzschluss zu begegnen und eine wirksame Einleitung der Magnetfeldlinien in den zu betätigenden Magnetanker zu gewährleisten, sofern die Betätigungsspule der bekannten Lösung bestromt wird.

Der Patentschrift EP 1 343 993 B1 ist ein elektrisch betriebenes Zweiwegeventil zur Steuerung eines flüssigen Fluids entnehmbar, wobei ein erstes feststehendes Gehäuseteil zur Anordnung einer Magnetspule dient, wobei ein Magnetanker in einer Axialführung des Gehäuseteils bewegbar gehalten ist. Der Anker weist ein oberes Teil auf, welches in axialer Richtung des feststehenden Gehäuseteiles diesem zugewandt ist und wird mit diesem nach Bedarf von der Magnetspule angezogen. Der Anker weist ferner ein buchsenförmiges unteres Teil auf, welches ein Betätigungsteil hält, das eine zentrale Durchgangsbohrung in einem Ventilschließglied des Zweiwegeventils ansteuert.

Das Ventilschließglied ist axial bewegbar in dem zweiten Gehäuseteil gelagert und steuert einen Ventilsitz an, der einen Einlass des Zweiwegeventils mit einem Auslass verbindet oder trennt. Im Inneren des Ventilschließglieds ist eine erste Bypassbohrung angeordnet, welche in der Lage ist, den Einlass des Ventils mit einer rückseitigen Kammer an dem Ventilschließglied zu verbinden. Eine zweite von dem Betätigungsteil gesteuerte Fluidleitung kann die rückseitige Kammer mit dem Auslass des Ventils verbinden.

An der zweiten Bypassbohrung ist an einem axialen Ende des Ventilschließglieds ein Rückschlagventil angeordnet, um den Fluidrückfluss in Richtung der Kammer zu verhindern. Das Rückschlagventil ist mehrteilig ausgebildet, wobei ein Ventilschließglied durch ein Halteteil in einer Presspassung des Rückschlagventilgehäuses bewegbar festgelegt ist. Durch die Montage des Halteteils und der Herstellung des Halteteilsitzes ist die Herstellung und Montage des Magnetventils oder Zweiwegeventils entsprechend aufwendig.

Aus der US 5 271 599 A geht ein modulares Magnetventil hervor. In einem Ventilgehäuse ist ein Ventilkolben angeordnet, der eine Durchgangsbohrung aufweist. An der Spitze des Ventilkolbens ist zur Bildung eines Rückschlagventils eine Kugel in eine Ausnehmung eingesetzt. Die Öffnung der Ausnehmung wird nach dem Einsetzen umgeformt, um die Kugel in der Ausnehmung einzuschließen.

Ausgehend von dem genannten Stand der Technik liegt der Erfindung die Aufgabe zugrunde, ein einfach herzustellendes und zu montierendes Magnetventil zur Verfügung zu stellen. Eine dahingehende Aufgabe löst ein Magnetventil mit den Merkmalen des Patentanspruches 1 in seiner Gesamtheit sowie ein Verfahren zur Herstellung des Magnetventils mit den Merkmalen des Patentanspruchs 9.

Das Magnetventil für die Ansteuerung eines Fluids, beispielsweise in Form eines Hydraulikmediums, weist ein Ventilschließglied auf, das zudem ein Gehäuse für ein Rückschlagventil beinhaltet, wobei das Rückschlagventil die oben beschriebenen Funktionen gemäß Stand der Technik gleichfalls erfüllen kann. Das Rückschlagventil weist ein Gehäuse auf, in dem ein Rückschlagventil-Schließglied bewegbar angeordnet ist. Das Gehäuse ist einstückig mit dem Ventilschließglied gebildet und erfährt nach dem Einsetzen des Rückschlagventil-Schließglieds eine Gestaltveränderung dahingehend, dass das Rückschlagventil-Schließglied in dem Gehäuse bewegbar gehalten und von Fluid umströmbar ist.

Ein dahingehend erfindungsgemäßes Magnetventil ist aufgrund seiner konstruktiven Gestaltung des Rückschlagventil-Gehäuses vereinfacht ausführbar, insbesondere in Bezug auf die erforderlichen Toleranzen bei der Fertigung; und weiter ist auch die Montage vereinfacht, da ein zusätzliches Verschluss- oder Halteteil für das Rückschlagventil-Schließglied erst gar nicht benötigt wird. Bei einem besonders bevorzugten Ausführungsbeispiel des erfindungsgemäßen Magnetventils ist vorgesehen, dass das Gehäuse für das Rückschlagventil-Schließglied an einer, einen Ventilsitz für das Magnetventil bildenden Stirnseite, vorzugsweise an der dem Einlass oder Auslass des Magnetventils zugewandten Stirnseite des Ventilschließglieds, angeordnet ist und einstückig in einer Stirnseite eingebracht ist oder aus der Stirnseite des Ventilschließglieds herausragt.

Bei einem Ausführungsbeispiel, in dem zumindest ein Teil des Gehäuses des Rückschlagventils aus der Stirnseite des Ventilschließglieds herausragt, ist es vorteilhaft, das Gehäuse für das Rückschlagventil-Schließglied in der Art einer Hülse, insbesondere als zylindrische Hülse, auszubilden. Die Hülse weist dabei einen Innendruchmesser auf, der größer ist als ein größter Durchmesser oder Größtmaß des Rückschlagventil-Schließgliedes selbst.

Auf einfachste Weise lässt sich eine dahingehende Hülse nach dem Einsetzen des Rückschlagventil-Schließglieds verstemmen oder in anderer geeigneter Weise umformen. Durch den Umformvorgang, beispielsweise unter Einsatz einer üblichen Taumelnietmaschine wird erreicht, dass das Rückschlagventil-Schließglied in dem Gehäuse gefangen ist, aber vor seinem Ventilsitz bewegbar in seiner jeweiligen Funktionsstellung verbleibt.

Die besonders einfache Herstellung des Rückschlagventils ergibt sich, dadurch, dass das Rückschlagventil-Gehäuse durch den Umformvorgang in eine elliptische Form des Querschnitts des Gehäuses zumindest über dem Rückschlagventil-Schließglied gebracht wird, da diese auf einfache Weise durch das Ansetzen eines Umformwerkzeugs von zwei entgegengesetzten Seiten des Gehäuses her erreicht werden kann. Dabei bilden sich in der Projektion des Rückschlagventil-Schließglieds oder der Öffnung des Gehäuses zwei lichte Querschnitte zu beiden Seiten des Rückschlagventil-Schließglieds aus. Die lichten Querschnitte lassen ein symmetrisches Einströmen und gegebenenfalls ein Umströmen des Rückschlagventil-Schließglieds zu. Dadurch wird ein Schwingen oder Vibrieren des Rückschlagventil-Schließglieds während des Betriebes des Magnetventils wirksam verhindert.

Es können beliebig andere lichte Querschnitte nach dem Umformvorgang des Gehäuses des Rückschlagventils ausgebildet werden. Vorzugsweise sind die lichten Querschnitte symmetrisch, insbesondere punkt- oder liniensymmetrisch um das Rückschlagventil-Schließglied angeordnet.

Das Rückschlagventil lässt sich in besonders einfacher Weise in einem Ventilanschlussbereich eines Anschlussstutzens des Magnetventils anordnen. Bei einer bauraumminimierten Ausführungsform des erfindungsgemäßen Magnetventils ist der größte Durchmesser des Gehäuses etwa so groß, wie ¼ des größten Außendurchmessers des Ventilschließglieds an seiner Stirnseite.

Ein Verfahren zur erfindungsgemäßen Herstellung des Magnetventils sieht zumindest folgende Verfahrensschritte zur Montage des Rückschlagventils vor:
- einstückige Ausbildung des Gehäuses des Rückschlagventils durch beispielsweise einen spanabhebenden Bearbeitungsvorgang wie Drehen, Bohren oder Fräsen;
- anschließendes Einsetzen des Rückschlagventil-Schließglieds, das beispielsweise als Ventilkugel ausgebildet sein kann, in das Gehäuse, und
- nachfolgendes Verändern der Gestalt des Gehäuses derart, dass das Rückschlagventil-Schließglied in dem Gehäuse vor dem Rückschlagventilsitz gefangen ist, aber dabei bewegbar bleibt.

Bei einem derart hergestellten Rückschlagventil des Magnetventils kann das Fluid durch den umgeformten Bereich des Gehäuses strömen und an dem Rückschlagventil-Schließglied vorbei in zumindest einem seiner Funktionsstellungen dessen Ventilsitz passieren.

Als besonders vorteilhaft hat es sich erwiesen, den Umformvorgang des Gehäuses des Rückschlagventiles durch einen Kaltumformvorgang zu bewirken, wie beispielsweise Taumelnieten.

Im Folgenden wird das erfindungsgemäße Magnetventil anhand eines Ausführungsbeispieles nach der Zeichnung näher erläutert. Dabei zeigen in schematischer, nicht maßstäblicher Darstellung die
- Fig. 1: einen Längsschnitt durch das Magnetventil;
- Fig. 2 und 3: in Blickrichtung des Pfeils A in Fig. 1 gesehen, eine stirnseitige Ansicht auf ein Ventilschließglied des Magnetventils mit unverformtem zylindrischen Gehäuse für die Aufnahme einer Ventilschließkugel bzw. im verformten Zustand des Gehäuses zwecks Fangen der Ventilschließkugel in einem Gehäuseraum.

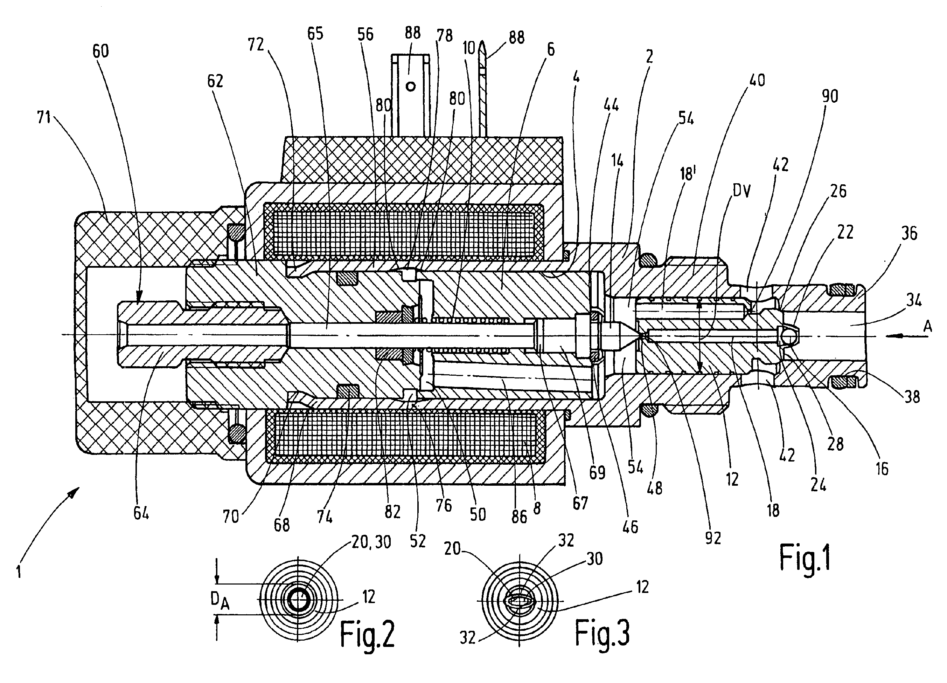

In der Fig. 1 ist in einem Längsschnitt ein Magnetventil 1 zur Ansteuerung eines Fluids, wie etwa einem flüssigen hydraulischen Arbeitsmittel, für einen nicht näher dargestellten hydraulischen Verbraucher einer hydraulischen Anlage gezeigt. Das Magnetventils 1 ist als elektromagnetisch betätigbares, vorgesteuertes Ventil ausgeführt. Das Magnetventil 1 besteht in seinen wesentlichen Teilen aus einem zylindrischen ersten Gehäuseteil 2 mit sich entlang seines Außen- und Innendurchmessers in Stufen verändernden Abmessungen.

Das erste Gehäuseteil 2 bildet mit seinem am rechten Rand der Figur gezeigten Anschlussstutzen 36 mit einem in eine Umfangsnut 38 eingelegten O-Ring eine fluidführende Verbindungsmöglichkeit zu einer nicht näher gezeigten hydraulischen Anlage aus, insbesondere in Form des hydraulischen Verbrauchers. Der Anschlussstutzen 36 ist Teil eines Ventilkörpers 40 in dessen Axialbereich das erste Gehäuseteil 2 eine große Wandstärke im Vergleich zu seinen übrigen Wandbereichen aufweist. Insoweit bildet der Anschlussstutzen 36 mit seinem gestuften Aufbau eine Art Cartridge-Ventilanschlusslösung aus. Ein radial in dem Ventilkörper 40 von beiden Seiten her eingebrachter Ventilanschluss 42 ist mit einem zentral und axial aus dem Anschlussstutzen 36 herausgeführten Ventilanschluss 34 verbindbar, wobei ein Ventilschließglied 12 in der Art eines Ventilkolbens ausgebildet, diese fluidführende Verbindung ansteuert. Das Ventilschließglied 12 ist als Stufenkolben ausgebildet und über ein Betätigungsteil 14, das über einen Klemmsitz 44 mit einem Magnetanker 6 verbunden ist, axial beaufschlagt.

Der Klemmsitz 44 ist dadurch bewirkt, dass ein Stahlring 46 in einer entsprechenden Aufnahme sowohl am Betätigungsteil 14 als auch an dem Magnetanker 6 festliegt. Das Ventilschließglied 12 bildet mit seinem, in der Figur gezeigten rechten stirnseitigen Randbereich 28, einen Ventilsitz 26 aus zusammen mit den Gehäuseteilen, die die Bohrung umgeben, welche den Ventilanschluss 34 darstellt.

Das Betätigungsteil 14 liegt in der gezeigten Stellung mit seiner konischen Spitze 48 in einer Bypass-Bohrung 18, in Längsrichtung des Ventilschließgliedes 12 geführt, mit seinem rechten freien Ende auf. Eine zweite Bypass-Bohrung 18', die radial mit Abstand zu der zentral, das Ventilschließglied 12 durchragenden Bypass-Bohrung 18 und parallel zu dieser angeordnet, das Ventilschließglied 12 durchgreift, ist fluidführend mit dem Ventilanschluss 42 verbunden und zwar über eine entsprechende Drosselstelle 90.

Ebenso ist die erstgenannte Bypass-Bohrung 18 über eine Drosselstelle 92 mit einem rückseitigen Druckraum 54 in Verbindung, wobei in die dahingehende Drosselstelle 92 die Spitze 48 des Betätigungsteils 14 in der in der Fig. 1 gezeigten Grundstellung des Magnetventils 1 eingreift. Insoweit bildet also die Bypassbohrung 18' bei entfernter Stößelspitze 48 eine fluidführende Verbindung zu dem rückseitigen Druckraum 54 aus, der sich zwischen dem Magnetanker 6 und der zugewandten Stirnseite des Ventilschließglieds 12 erstreckt.

Ein Rückschlagventil 16 ist an dem dem Ventilanschluss 34 zugewandten Ende des Ventilschließglieds 12 angeordnet und steuert einen Fluidfluss von dem Ventilanschluss 34 über die Bypass-Bohrung 18 zu dem rückseitigen Druckraum 54 an. Das Rückschlagventil 16 selbst ist durch ein dünnwandiges, rohrförmiges Gehäuse 22 gebildet und weist an seinem Ventilsitz 24 einen kreisförmigen Querschnitt auf. Das Gehäuse 22 ist einstückig aus einer Stirnseite 28 des Ventilschließgliedes 12 ausgeformt und vorzugsweise als Drehteil (vgl. Fig. 2) ausgeführt. Ein als Kugel 30 gebildetes Rückschlagventil-schließglied 20 ist in der in der Figur in seinem montierten Zustand gezeigten Form dadurch bewegbar vor dem Ventilsitz 24 gehalten, indem das Gehäuse 22 zu einem elliptischen Querschnitt an seinem vorderen, dem Ventilanschluss 34 zugewandten Ende verstemmt ist (vgl. Fig. 3). Der elliptische oder ovale Querschnitt des Gehäuses 22, lässt darüber hinaus zu beiden Seiten der Kugel 30 lichte Querschnitte 32 zu. Durch die dahingehend lichten Querschnitte 32 ist ein Einströmen von Fluid in das Gehäuse 22 ermöglicht (vgl. Fig. 3). Das Gehäuse 22 des Rückschlagventils 16 hat dabei einen größten Außendurchmesser D_{A} von etwa ¼ des größten Außendurchmessers Dv des Ventilschließglieds 12. Der Innendurchmesser des Gehäuses 22 ist jedenfalls derart gewählt, dass er eine Art Spielpassung mit dem Durchmesser der Kugel 30 bildet.

In Blickrichtung auf die Figur gesehen geht links von dem Ventilkörper 40 das erste Gehäuseteil 2 in eine dünnwandige Hülse 56 über, die innerhalb des Magnetventils 1 das sogenannten Polrohr ausbildet. Ferner bildet die Hülse 56 eine Art Axialführung 4 für den Magnetanker 6 aus, und zwar über eine Länge die etwa der Hälfte ihrer gesamten Länge entspricht. Zwischen dem Magnetanker 6 und der Hülse 56 kann ein Gleit- oder Dichtmedium eingebracht sein oder Teile der Innengehäusewandung der Hülse 56 sind im Außendurchmesser gegenüber den sonstigen Wandteilen etwa im Durchmesser geringfügig verbreitert, so dass abgesetzte Schmiertaschen entstehen, in denen das Fluid dann eine Art Gleitdichtung für den Magnetanker 6 ausbildet. Vorzugsweise ist der Magnetanker 6 derart in der Aufnahmehülse 56 gelagert, dass er insbesondere an seinen beiden gegenüberliegenden stirnseitigen Endbereichen in der Axialführung 4 sicher geführt ist.

Der kolbenartige Magnetanker 6 wird an seiner freien Stirnseite von dem genannten Betätigungsteil 14 durchragt und kann in Abhängigkeit von der Bestromung der die Hülse 56 in ihrer wesentlichen Länge umschließenden Magnetspule 8 verfahren werden. Des weiteren ist das Magnetventil 1 mit einer als Ganzes mit 60 bezeichneten Notbetätigung versehen, die ein zweites Gehäuseteil 62 durchgreift, wobei mittels einer von Hand betätigbaren Stellschraube 64 sich eine Betätigungsstange 65 ansteuern lässt, die das zweite Gehäuseteil 62 durchgreift und mit einer stirnseitigen Verbreiterung 67 in einer Ausnehmung 69 des Magnetankers 6 ausmündet, wobei in Blickrichtung auf die Fig. 1 gesehen, die Ausnehmung 69 in die Aufnahme für das Betätigungsteil 14 ausmündet. Mittels der dahingehenden Notbetätigung 60 lässt sich im Bedarfsfall über die Stellschraube 64 von Hand der Magnetanker 6 in seine äußerst linke Position verfahren, so dass das Betätigungsteil 14 die Bypassbohrung 18 freigibt. Die dahingehende Art von Notbetätigung ist auf dem Gebiet von Magnetventilen üblich, so dass an dieser Stelle hierauf nicht näher im Detail eingegangen wird. In jedem Fall ist durch die Notbetätigung 60 sichergestellt, dass bei nicht funktionierendem Magnetsystem das Ventilschließglied 12 im Sinne einer Öffnen-Position freigegeben wird. Zum Durchführen der dahingehenden Notfunktion ist eine äußere Abdeckkappe 71 von dem zweiten Gehäuseteil 62 abzuschrauben oder abzuziehen.

Das zweite Gehäuseteil 62 ist im wesentlichen, wie das erste Gehäuseteil 2, ein zylindrischer einstückiger Körper mit entsprechenden Durchmesseranpassungen an seiner Außenseite. Das zweite Gehäuseteil 62 ist von der Hülse 56 des ersten Gehäuseteiles 2 etwa bis zur Hälfte der axialen Erstreckung eine Art Steckverbindung 68 bildend umschlossen, wobei das zweite Gehäuseteil 62 eine Umfangsnut 70 aufweist, in die ein Rand 72 der Hülse 56 eingebördelt ist. Der Umfangsbereich der Hülse 56 stellt sich im Längsschnitt als Kröpfung dar, d.h. der Rand 72 kommt nach der Umformung parallel versetzt in der Umfangsnut 70 zu liegen. Ferner ist ein O-Dichtring 74 zwischen der Hülse 56 und dem Gehäuseteil 62 in einer Nut des zweiten Gehäuseteils 62 angeordnet und dichtet dergestalt das erste Gehäuseteil 2 gegenüber dem zweiten Gehäuseteil 62 ab.

Zur magnetischen Trennung der beiden Gehäuseteile 2, 62 voneinander im Bereich der axialen Mitte der Magnetspule 8, ist die Hülse 56 mit einer Wandreduzierung 76 auf etwa die Hälfte der sonstigen Wandstärke der Hülse 56 gebracht. Die Wandreduzierung 76 ist durch eine Nut 78 mit flach auslaufenden Flanken 80 am Innenumfang der Hülse 56 gebildet. Ferner umgreift die Wandreduzierung 76 ringartig den Innenbereich der Hülse 56. Durch die Wandreduzierung 76 ist die magnetische Trennung insbesondere zwischen den beiden Gehäuseteilen 2, 62 erreicht und befindet sich der Magnetanker 6 in seiner in der Fig. 1 gezeigten vorderen Position, ist zwischen einem ringartigen Ende des Magnetankers 6 und einem benachbart zugeordneten stufenförmigen Absatz an einer zu dem Magnetanker 6 benachbarten Seite des zweiten Gehäuseteils 62 eine Art magnetischer Leerraum geschaffen, der zum einen die magnetischer Trennung weiter begünstigt und zum anderen eine definierte Kraftlinieneinleitung von der Magnetspule 8 ausgehend in den Magnetanker 6 erlaubt. Sofern hier von einem Leerraum die Rede ist, kann dieser im Betrieb des Magnetventils 1 mit Fluid befüllt sein, wobei überschüssiges Fluid beim Betätigen des Magnetankers 6 auch wieder abgeführt werden kann. Durch die genannte Art der Herstellung der magnetischen Trennung der beiden Gehäuseteile 2, 62 voneinander, entsteht keinerlei thermische Belastung, was ansonsten der Fall ist, beispielsweise wenn bei bekannten Auftragschweißverfahren ein nicht-magnetischer Werkstoff auf das Polrohr aufgebracht wird.

In einer zylindrisch sich verbreiternden Mittenbohrung im Bereich der linken Hälfte des Magnetankers 6 ist ein Energiespeicher 10 in Form einer Druckfeder eingebracht, der sich mit seinem einen freien Ende am Magnetanker 6 abstützt und seinem anderen freien Ende an einer Dichtungsanordnung 82, die in der Art einer Stoffbuchsenpackung ausgeführt ist. Die dahingehende Dichtungsanordnung 82 dichtet wiederum zur Vermeidung eines Druckmittelverlustes den Magnetankerraum 50 gegenüber der Umgebung im Bereich der Betätigungsstange 65 der Notbetätigung 60 ab. Druckmittel kann dabei in dem Zwischenraum als Teil des Magnetankerraumes 50 zwischen dem Magnetanker 6 und dem zweiten Gehäuseteil 62 anstehen und insoweit auch in dem Leerraum 52, der von einer Innenumfangseite des Magnetankers 6 und von einer sich stufenförmig verringernden Außenwand des zweiten Gehäuseteiles 62 begrenzt ist. Des weiteren kann innerhalb des Magnetankerraumes 50 Druckmittel über mindestens eine Längsbohrung 86 im Magnetanker 6 diesen von seiner hinteren Stirnseite zur vorderen Stirnseite in Richtung des Druckraumes 54 und umgekehrt durchqueren. Dergestalt ist in jeglicher Richtung ein Druckmittelausgleich gegeben, so dass Hemmnisse im Betrieb des Magnetankers 6 nicht auftreten können. Das Magnetventil 1 weist ferner eine übliche Abschirmung des Gehäuses auf, insbesondere im Bereich um seine Magnetspule 8 herum, wobei hier einschlägige Kunststoff- und Elastomermaterialien zum Einsatz kommen.

Die Magnetspule 8 ist mit ihrem Gehäuse auf der Außenseite der Hülse 56 aufgeschoben und zur Bestromung der Magnetspule 8 dient ein an der oberen Seitenwand des Spulengehäuses angebrachter Steckeranschluss 88 zur Anbindung an eine nicht näher dargestellte Steuer- und Stromversorgung.

Der Ventilkörper 40 des Magnetventils 1 ist sowohl von dem jeweiligen Ventilanschluss 42 zu dem Ventilanschluss 34 als auch umgekehrt durchströmbar. Im bestromten Zustand der Magnetspule 18 ist der Magnetanker 6 und mithin das Betätigungsteil 14 sowie das Ventilschließglied 12 in Blickrichtung auf die Fig. 1 gesehen nach links, entgegen der Rückstellkraft der Rückstellfeder in Form des Energiespeichers 10 bewegt, wobei dann eine Durchströmung des Ventilkörpers 40 in beiden Richtungen zwischen den Ventilanschlüssen 42 und 34 möglich ist.

Im unbestromten Zustand des Magnetventils 1 hingegen ist eine Druckmittelströmung vom jeweiligen Ventilanschluss 42 zum Ventilanschluss 34 verhindert; jedoch besteht umgekehrt die Möglichkeit der Fluidverbindung zwischen dem Ventilanschluss 34 und dem Ventilanschluss 42. Für die dahingehende Durchströmungsrichtung vom Anschluss 34 zu dem jeweiligen Anschluss 42 muss jedoch das Ventilschließglied 12 entgegen der Kraft der Rückstellfeder 10 verschoben werden, was beispielsweise bei einer Druckdifferenz von ca. 1,5 bar (Rückschlagfunktion) erfolgen kann. Wie dargelegt, ist hierbei die Magnetspule 8 unbestromt. Mit der erfindungsgemäßen Lösung ist mithin eine Art 2/2-Wege-Sitzventil realisiert, das magnetbetätigt und vorgesteuert als Einschraubventil Drücke von durchaus 350 bar beherrschen kann, das im normalen Zustand geschlossen ist und, wie dargelegt, eine Rückschlag- oder Reverse-Flow-Funktion erlaubt. Aufgrund der lichten sichelförmigen Querschnitte 32 kann bei einer Fluidströmung über die Bypassbohrung 18, an dem Rückschlagventil-Schließglied 20 vorbei, auf gegenüberliegenden Seiten Fluid in den Ventilanschluss 34 einströmen, sofern das Betätigungsteil 14 die dahingehende Bypassbohrung freigibt. Strömt hingegen Fluid über den Ventilanschluss 34 mit einem höheren Druck gegenüber dem Druck in der Bypassbohrung 18 zu, wird das Rückschlagventil-schließglied 20 auf den Ventilsitz 24 gedrückt und schließt die Bypassbohrung 18 insoweit ab.

## Patentansprüche

1. Magnetventil für die Ansteuerung eines Fluids, mit einem ersten Gehäuseteil (2) mit einer Axialführung (4) für einen Magnetanker (6), der unter der Wirkung einer, das erste Gehäuseteil (2) nach außen hin zumindest teilweise umgebenden Magnetspule (8) in der Axialführung (4) verschiebbar ist, mit einem Energiespeicher (10), und mit einem, ein Ventilschließglied (12) beaufschlagenden Betätigungsteil (14), wobei das Ventilschließglied (12) ein Rückschlagventil (16) für eine Ansteuerung einer Bypassbohrung (18) in dem Ventilschließglied (12) aufweist, dessen ein Rückschlagventil-Schließglied (20) aufnehmendes und dieses bewegbar haltendes Gehäuse (22) einstückig mit dem Ventilschließglied (12) gebildet ist und dass das Gehäuse (22) aufgrund einer Gestaltänderung nach Einsetzen des Rückschlagventil-Schließgliedes (20) dieses in seiner jeweiligen Funktionsstellung hält, wobei das Gehäuse (22) des Rückschlagventils (16) nach Einsetzen des Rückschlagventil-Schließgliedes (20) durch einen Umformvorgang in seiner Gestalt derart verändert ist, dass das Rückschlagventil-Schließglied (20) vor einem Ventilsitz (24) des Rückschlagventils (16) bewegbar gesichert ist, **dadurch gekennzeichnet, dass** nach dem Umformvorgang des Gehäuses (22) des Rückschlagventils (16) der Querschnitt des Gehäuses (22) eine elliptische Form aufweist.

2. Magnetventil nach Anspruch 1, **dadurch gekennzeichnet, dass** das Gehäuse (22) für das Rückschlagventil-Schließglied (20) an einer, einen Ventilsitz (26) für das Magnetventil (1) bildenden Stirnseite (28) des Ventilschließgliedes (12) angeordnet ist und einstückig aus der Stirnseite (28) des Ventilschließgliedes (12) ausgeformt ist.

3. Magnetventil nach Anspruch 2, **dadurch gekennzeichnet, dass** das Gehäuse (22) für das Rückschlagventil-Schließglied (20) vor dem Umformvorgang (Fig. 2) zylinderartig gebildet ist und einen Innendurchmesser aufweist, der größer als der Durchmesser des Rückschlagventil-Schließgliedes (20) ist.

4. Magnetventil nach einem der Ansprüche 1 bis 3, **dadurch gekennzeichnet, dass** das Rückschlagventil-Schließglied (20) eine Kugel (30) ist.

5. Magnetventil nach einem der Ansprüche 1 bis 4, **dadurch gekennzeichnet, dass** durch den Umformvorgang an dem Gehäuse (22) für das Rückschlagventil-Schließglied (20) ein oder mehrere lichte Querschnitte (32), die ein Umströmen des Rückschlagventil-Schließglieds (20) mit Druckmittel ermöglichen, gebildet sind.

6. Magnetventil nach Anspruch 5, **dadurch gekennzeichnet, dass** die lichten Querschnitte (32) symmetrisch um das Rückschlagventil-Schließglied (20) angeordnet sind.

7. Magnetventil nach einem der Ansprüche 1 bis 6, **dadurch gekennzeichnet, dass** das Rückschlagventil (16) in einen, einen Ventilanschluss (34) bildenden Anschlussstutzen (36) mündet.

8. Magnetventil nach einem der Ansprüche 1 bis 7, **dadurch gekennzeichnet, dass** das Gehäuse (22) des Rückschlagventils (16) einen größten Außendurchmesser (D_{A}) aufweist, der etwa ¼ des größten Außendurchmessers (Dv) des Ventilschließgliedes (12) entspricht.

9. Verfahren zum Herstellen eines Magnetventils nach einem der Ansprüche 1 bis 8, **dadurch gekennzeichnet, dass** das einstückig mit dem Rückschlagventil-Schließglied (20) gebildete Gehäuse (22) mit dem Rückschlagventil-Schließglied (20) bestückt wird und anschließend das Gehäuse (22) in seiner Gestalt durch Umformen derart verändert wird, dass das Rückschlagventil-Schließglied (20) vor dem Ventilsitz (24) des Rückschlagventils (16) bewegbar gesichert ist.

10. Verfahren nach Anspruch 9, **dadurch gekennzeichnet, dass** beim Umformvorgang ein Verstemmen in kaltem Zustand des Gehäuses (22) vorgenommen wird, vorzugsweise unter Einsatz einer Taumelnietmaschine.

## Claims

1. A solenoid valve for controlling a fluid, comprising a first housing part (2) having an axial guide (4) for an armature (6) which, under the action of a solenoid (8) at least partially surrounding the first housing part (2) to the outside, can be moved in the axial guide (4), comprising an energy store (10), and comprising an actuation part (14) acting on a valve closing member (12), the valve closing member (12) having a check valve (16) for controlling a bypass borehole (18) in the valve closing member (12), of which a housing (22) receiving a check valve closing member (20) and holding the latter moveably is formed integrally with the valve closing member (12), and due to a change in form after inserting the check valve closing member (20) the housing (22) holding the latter in its respective functional position, after inserting the check valve closing member (20) the housing (22) of the check valve (16) changing in form due to a reshaping process such that the check valve closing member (20) is secured moveably in front of a valve seat (24) of the check valve (16),
**characterised in that** after the reshaping process of the housing (22) of the check valve (16) the cross-section of the housing (22) has an elliptical shape.

2. The solenoid valve according to Claim 1, **characterised in that** the housing (22) for the check valve closing member (20) is arranged on a face side (28) of the valve closing member (12) forming a valve seat (26) for the solenoid valve (1) and is formed integrally from the face side (28) of the valve closing member (12).

3. The solenoid valve according to Claim 2, **characterised in that** the housing (22) for the check valve closing member (20) is formed like a cylinder before the reshaping process (Fig. 2) and has an internal diameter that is greater than the diameter of the check valve closing member (20).

4. The solenoid valve according to any of Claims 1 to 3, **characterised in that** the check valve closing member (20) is a sphere (30).

5. The solenoid valve according to any of Claims 1 to 4, **characterised in that** one or more clear cross-sections (32), which enable pressurising medium to flow around the check valve closing member (20), are formed on the housing (22) for the check valve closing member (20) by the reshaping process.

6. The solenoid valve according to Claim 5, **characterised in that** the clear cross-sections (32) are arranged symmetrically around the check valve closing member (20).

7. The solenoid valve according to any of Claims 1 to 6, **characterised in that** the check valve (16) discharges into a connection nozzle (36) forming a valve connection (34).

8. The solenoid valve according to any of Claims 1 to 7, **characterised in that** the housing (22) of the check valve (16) has a greatest outside diameter (D_{A}) which corresponds to approximately ¼ of the greatest outside diameter (D_{V}) of the valve closing member (12).

9. A method for producing a solenoid valve according to any of Claims 1 to 8, **characterised in that** the housing (22) formed integrally with the check valve closing member (20) is fitted with the check valve closing member (20) and then the housing (22) is changed in form by reshaping such that the check valve closing member (20) is moveably secured in front of the valve seat (24) of the check valve (16).

10. The method according to Claim 9, **characterised in that** during the reshaping process caulking is undertaken in the cold state of the housing (22), preferably using a wobble riveting machine.

## Revendications

1. Electrovanne pour se rendre maître d'un fluide comprenant une première partie (2) de corps ayant un guidage (4) axial pour une armature (6) d'aimant, qui peut être déplacée dans le guidage (4) axial sous l'effet d'une bobine (8) d'aimant entourant, au moins en partie, la première partie (2) du corps vers l'extérieur, comprenant un accumulateur (10) d'énergie et comprenant une partie (14) d'actionnement actionnant un obturateur (12) de la vanne, l'obturateur (12) de la vanne ayant un clapet (16) antiretour pour une commande d'un trou (18) de dérivation dans l'obturateur (12) de la vanne, dont l'enveloppe (22) recevant un clapet antiretour-obturateur (20) et maintenant celui-ci mobile, est formée d'une pièce avec l'obturateur (12) de la vanne et en ce que l'enveloppe (22) maintient, en raison d'une variation de forme, après l'insertion du clapet antiretour-obturateur (20), celui-ci dans sa position fonctionnelle respective, l'enveloppe (22) du clapet antiretour (16) étant, dans sa forme modifiée, après l'insertion du clapet antiretour-obturateur (20) par une opération de déformation de sorte que le clapet antiretour-obturateur (20) est monté mobile devant un siège (24) du clapet (16) antiretour, **caractérisé en ce qu'**après l'opération de déformation de l'enveloppe (22) du clapet (16) antiretour, la section transversale de l'enveloppe (22) a une forme elliptique.

2. Electrovanne suivant la revendication 1,
**caractérisée en ce que** l'enveloppe (22) du clapet antiretour-obturateur (20) est monté sur un côté (28) frontal, formant un siège (26) de l'électrovanne (1), de l'obturateur (12) de la vanne et est formée d'une seule pièce avec le côté (28) frontal de l'obturateur (12) de la vanne.

3. Electrovanne suivant la revendication 2,
**caractérisée en ce que** l'enveloppe (22) du clapet antiretour-obturateur (20) est de type cylindrique avant l'opération dé déformation (figure 2) et a un diamètre intérieur qui est plus grand que le diamètre du clapet antiretour-obturateur (20).

4. Electrovanne suivant l'une des revendications 1 à 3,
**caractérisée en ce que** le clapet antiretour-obturateur (20) est une bille (30).

5. Electrovanne suivant l'une des revendications 1 à 4,
**caractérisée en ce que**, par l'opération de déformation, il est formé, sur l'enveloppe (22) du clapet antiretour-obturateur (20), une ou plusieurs sections (32) transversales libres, qui permettent à du fluide sous pression de contourner le clapet antiretour-obturateur (20).

6. Electrovanne suivant la revendication 5,
**caractérisée en ce que** les sections (32) transversales libres sont disposées symétriquement autour du clapet antiretour-obturateur (20).

7. Electrovanne suivant l'une des revendications 1 à 6,
**caractérisée en ce que** le clapet (16) antiretour débouche dans une tubulure (36) de raccordement formant un raccord (34) de vanne.

8. Electrovanne suivant l'une des revendications 1 à 7,
**caractérisée en ce que** l'enveloppe (22) du clapet (16) antiretour a un diamètre (D_{A}) extérieur le plus grand, qui représente à peu près ¼ du diamètre (D_{V}) extérieur le plus grand de l'obturateur (12) de la vanne.

9. Procédé de fabrication d'une électrovanne suivant l'une des revendications 1 à 8, **caractérisée en ce que** l'on équipe l'enveloppe (22), formée d'une pièce avec le clapet antiretour-obturateur (20), du clapet antiretour-obturateur (20) et ensuite on modifie, par déformation, l'enveloppe (22) dans sa forme de manière à monter le clapet antiretour-obturateur (20) mobile devant le siège (24) du clapet (16) antiretour.

10. Procédé suivant la revendication9, **caractérisée en ce que** dans l'opération de déformation on effectue un matage à l'état froid de l'enveloppe (22), de préférence en utilisant une machine de rivetage par nutation.
